# EUROPEAN PATENT SPECIFICATION

(11) **EP 4 093 618 B1**
(45) Date of publication and mention of the grant of the patent: **25.03.2026**
(21) Application number: 21703510.4
(22) Date of filing: 25.01.2021
(51) Int. Cl.: B60B 27/00, B60T 1/093, B60T 1/10, B60T 10/04, F16D 61/00

(54) **AN INTEGRATED WHEEL HUB AND PUMP/MOTOR UNIT**
INTEGRIERTE RADNABE UND PUMPEN- / MOTORGERÄT
MOYEU DE ROUE ET UNITÉ DE POMPE / MOTEUR INTÉGRÉS

(30) Priority: 24.01.2020 GB 202001018
(43) Date of publication of application: 30.11.2022
(73) Proprietor: Evectek Ltd, Par Cornwall PL24 2HW (GB)
(72) Inventor: RYTON, George, Cornwall PL24 2HW (GB)
(74) Representative: London IP Ltd
(86) International application number: PCT/GB2021/050171
(87) International publication number: WO 2021/148824

(56) References cited:
- EP-A1- 0 131 505
- WO-A1-2013/173882
- WO-A1-2018/119326
- WO-A2-2004/058550
- DE-C1- 4 212 983
- FR-A1- 3 033 613
- US-A- 3 903 696
- US-A1- 2019 305 558
- US-B1- 9 163 724

## Description

This invention relates to an integrated wheel hub and motor/pump unit, particularly but not exclusively a multispeed hydraulic motor/pump unit suitable for an electro-hydraulic propulsion system, together with a control valving system for vehicles using an electro-hydraulic propulsion system

### BACKGROUND OF THE INVENTION

Advances in electrical devices and energy storage technologies, and the general aim of societies to combat climate change, have propelled and accelerated the development of electromobility. The introduction of low emissions or emissions-free zones in towns and a changed political framework will speed up its expansion. A number of entities are investing in electromobility and are enhancing existing concepts, introducing technological innovations and charting their future applications. This invention is part of this necessary evolution of the current solutions to electromobility to reduce the necessity for a mechanical drive system and solve the distinctly negative problem surrounding the toxic dust particles emitted into the atmosphere from the existing friction braking systems. This element has now become a significant problem both politically and health wise in urban areas.

Hydrostatic transmission systems with regenerative braking and energy storage, such as that described in EP0131505A1, typically include hydraulic motors connected to the vehicle drivetrain and located off-wheel, transmitting power via mechanical components such as differentials and gearboxes. Such arrangements introduce complexity, increase part count and unsprung weight, and limit flexibility in vehicle design ., however a more efficient arrangement would be beneficial.

The advantages of electromobility are widely known to people educated in the art and can be shown not only by their direct impact on reducing CO2 emissions and other harmful gases but also by their improved maintenance and reduced noise pollution.

In addition, in the near future severely congested and polluted town centers may be turned into zero-emissions zones and thus only zero-emission vehicles will be able to drive through them.

Current electromobility solutions have a high degree of efficiency of up to 96% compared with internal combustion engines that have an upper efficiency of 40%.

On vehicle dynamics and handling, electromobility vehicles propulsion systems have full torque characteristics at standstill which allows them to accelerate faster than a vehicle with an internal combustion engine with a similar output.

The electromobility solutions drive system includes a few key components that are similar in function among all the available solutions:
- An energy storage and its associated control
- Electric motor/generator and associated control
- Power transmission and control
- Safety systems including the braking system
- Vehicle climate control system

The location of these various sub-systems varies between the solutions and mainly depend on the vehicle architecture that is pursued. However, there are limited degrees of freedom in the location of the heavy components within the vehicles due to their weight and volumes driven by vehicle architecture and principally the transmission systems architectures.

This Invention allows electromobility solutions to Site the Power module and subsequent drive system sub-components in any advantageous position within the chassis configuration for different types of vehicles.

This invention allows the design of the vehicle to have multi wheel drive without inhibitive, costly, complicated and cumbersome mechanical drive components, and gives a significant degree of freedom for innovative design solutions.

### SUMMARY OF THE INVENTION

According to the present invention, there is provided a wheel drive motor system according to the independent claims.

The electromobility solution disclosed herein uses a wheel drive system that negates the use of complicated mechanical transmission systems and eliminates friction braking.

The vehicle architecture allows greater degrees of freedom in the location of the major components for different types of vehicles to achieve optimal weight distribution and low center of gravity.

Ideally then, a hydraulic motor/pump, valve system, ABS system and associated clutch units are integrated within the wheel hub to reduce weight and complexity. This eliminates the need for any driveshafts and associated transmission components by reducing the overall part count and simplifying the complete drive system design.

In an alternative embodiment, the motor/pumps hub units can be used to counterbalance the un-sprung weight of the vehicle thus reducing the timed frequency response in the springing and damping by significantly reducing inertia in the un-sprung weight factor.

The weight of the motor/pump is counterbalanced against the weight of the wheel thus improving the vehicle dynamics. The Motor/Pump is independent of the wheel hub and is placed on a subassembly of the Wishbone Wheel Hub and Motor/Pump so as to counter balance the weight of the Wheel and Hub assemble to reduce or negate the effect of the inertia on the suspension control elements i.e springing and damping. This will allow better ride comfort and control as well as improvements to handling and dynamics. The Failsafe ABS System would remain in the Wheel hub, and can be used as an independent non particle emitting braking system under a separate control strategy.

The invention results in a Wheel Drive Unit which eliminates the need for a mechanical drive from the power unit and also eliminates the need for the existing friction brakes.

The vehicle architecture is applicable to single and multi-wheel drive systems.

### BRIEF DESCRIPTION OF THE DRAWINGS

FIG. 1 is a schematic of the singular integrated Wheel Hub Motor/Pump, control valving system, ABS system and control clutches, for the multi wheel drive system
FIG. 2 is the detailed section of the schematic showing the integrated Wheel Hub valving system assembly mounted in the wheel hub and its interaction with the hydraulic power storage and the controlling valves;
FIG; 3 is the detailed section of the schematic showing the integrated Wheel Hub Pump/Motor; ABS system and Wheel Clutch assembly mounted in the wheel hub;
FIG; 4a is a 3-dimensional view of the LH wheel drive unit mounted in the wheels;
FIG; 4a is a 3-dimensional view of the RH wheel drive unit mounted in the wheels;
FIG; 5a is a Side view of the wheel drive unit mounted in the wheel;
FIG; 5b is a Front view of the wheel drive unit mounted in the wheel; and

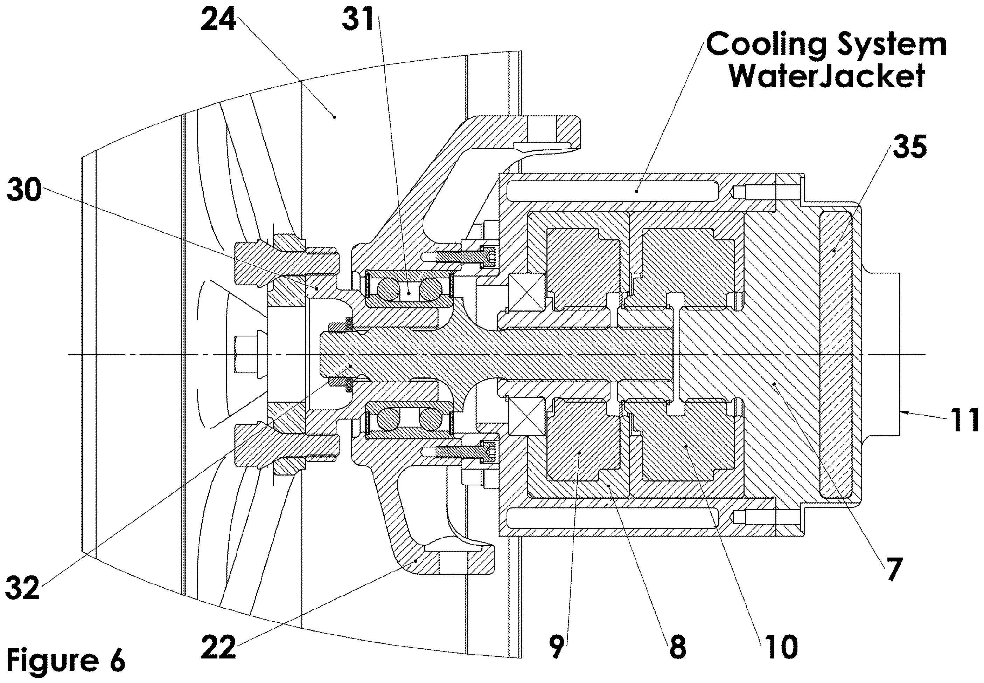

FIG. 6 is the detailed section view A-A of the Wheel, Wheel Hub, and Wheel Drive Unit assembly.

### DETAILED DESCRIPTION OF THE INVENTION

In the following description, numerous details are set forth to provide an understanding of the present invention. However, it will be understood by those of ordinary skill in the art that the present invention may be practiced without these details and that numerous variations or modifications from the described embodiments may be possible.

The present invention relates to an Integrated Wheel Hub and Multispeed Hydraulic Motor/Pump Unit, ABS system, Wheel Clutch and Control Valving System for vehicles using an Electro-hydraulic propulsion system and its practical implementation in a standard and a sports vehicle. However, the devices and methods of the present invention are not limited to use in the specific applications that are described herein.

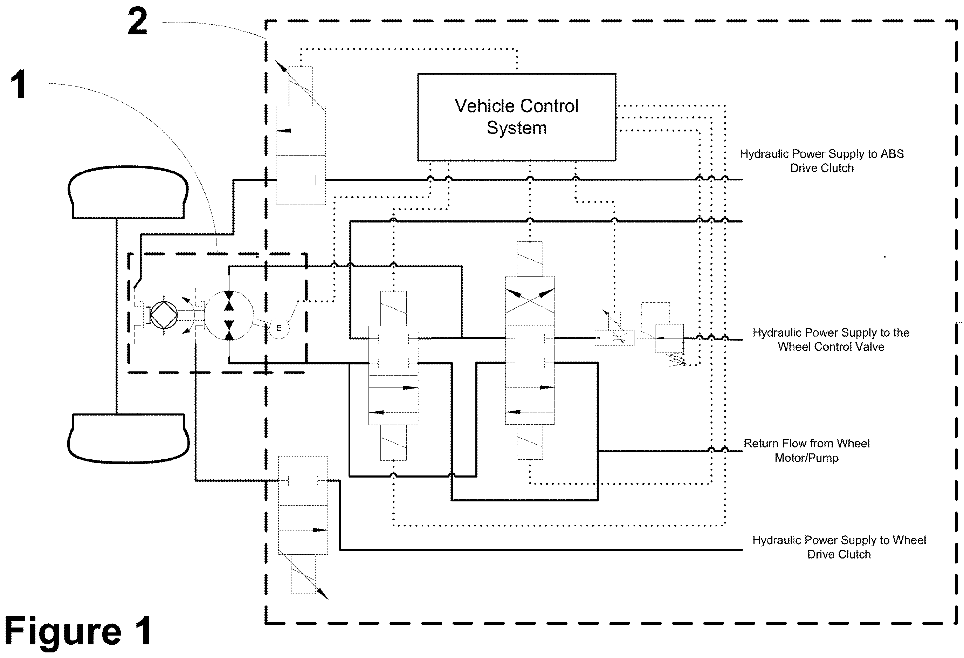

Referring generally to FIG 1. there is shown the schematic of the integrated Wheel Hub Motor/Pump ABS system and wheel clutch 15 and wheel 16, and control valving system 20 for the multi drive system of an electromobility solution that uses hydraulic power as a mean of power distribution and control.

The schematic is showing the key sub-systems and their interconnections. Namely:

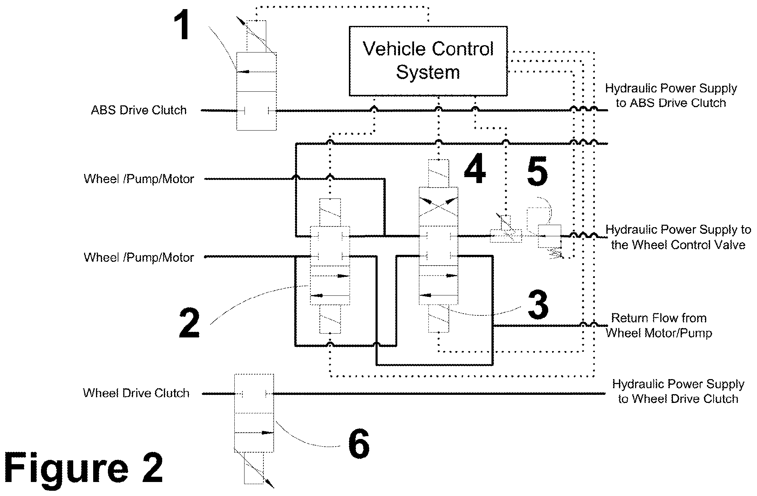

Fig 2 - the valving system and interconnections, and the vehicle system controller

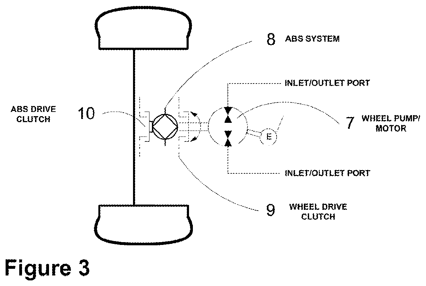

Fig 3 - The in-wheel hydraulic Motor/Pump, ABS system and Wheel Clutch.

During braking, the power is extracted from each wheel 16 via the wheel-mounted motor/pump unit described in more detail below. The flow and pressure in the hydraulic fluid generated during the brake by the wheel-mounted motor/pump unit can be stored in an accumulator. The stored energy can be kept in the accumulator either to drive the wheels when braking has ceased, or directed to other applications.

The logic for the optimal control of the system is embedded in the Vehicle system controller.

Referring generally to FIG 2. there is shown the detailed schematic of the wheel control valving. The control of the valves depends on the drive conditions and is conducted by the vehicle system controller.

The Hydraulic Power Supply for the system is ideally an electric-hydraulic unit that uses an electric motor to pressurize the hydraulic fluid, and more ideally electric-hydraulic unit that can utilize return flow as an electric generator. As previously mentioned, an accumulator may also be used, ideally in conjunction, to store and supply hydraulic pressure to the system. After passing through a pressure relief valve 5 and restrictor 4, the hydraulic power supply controls the wheel pump/motors via wheel control valve blocks 2, 3 controlled by the Vehicle Control System.

The Vehicle Control System also controls valve block 1 which supplies the ABS drive clutch with hydraulic fluid to operate the braking system. When braking is in operation, the wheel pump/motors pressurize the hydraulic fluid, which is returned to the system via valve blocks 2, 3, to be utilized by the electric-hydraulic unit and/or the accumulator.

The Vehicle Control System also controls a valve block 6 which supplies the wheel drive clutch between the wheel pump/motors and the wheels 16.

Each wheel pump/motor, wheel clutch and each ABS drive clutch ideally controls a single wheel. Although illustrated and described here for one wheel, the principles discussed herein could equally be applied to multi wheel drive cars, other types of wheeled vehicles articulated vehicle trailers, and motor- cycles - either as a one wheel drive or two wheel drive system.

Referring generally to FIG 3. there is shown the detailed schematic of the Wheel Motor/Pump unit, ABS system, and Wheel Drive Clutching configuration. The hub wheel 16 is engageable by the ABS drive clutch 9 controlled by the ABS system 8, and the wheel drive clutch 10, which is driven by the wheel pump/motor 7 which is fed by hydraulic inlet/outlet ports. The operation of the ABS drive clutch 9, wheel drive clutch 10, and wheel pump/motor is ultimately controlled by the Vehicle Control System.

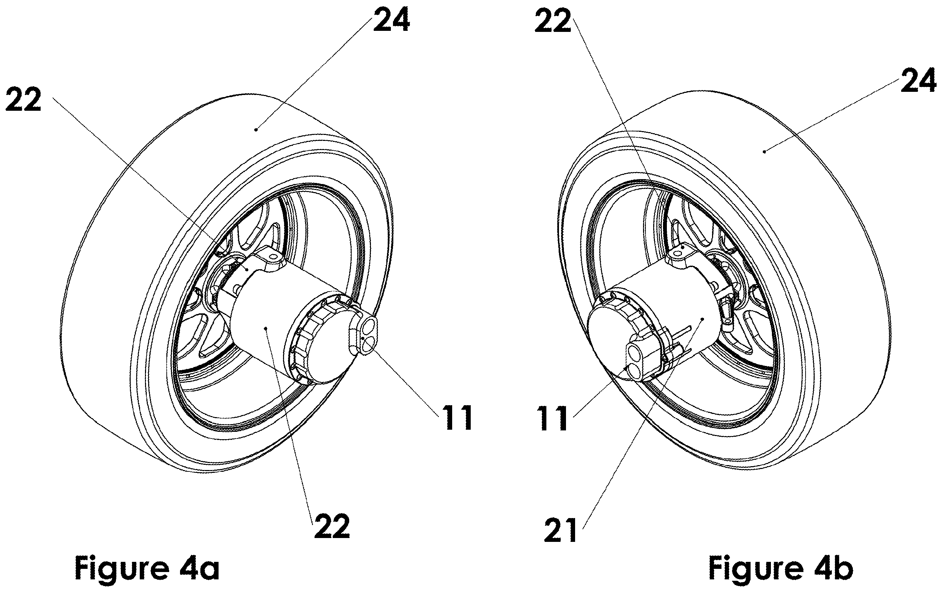

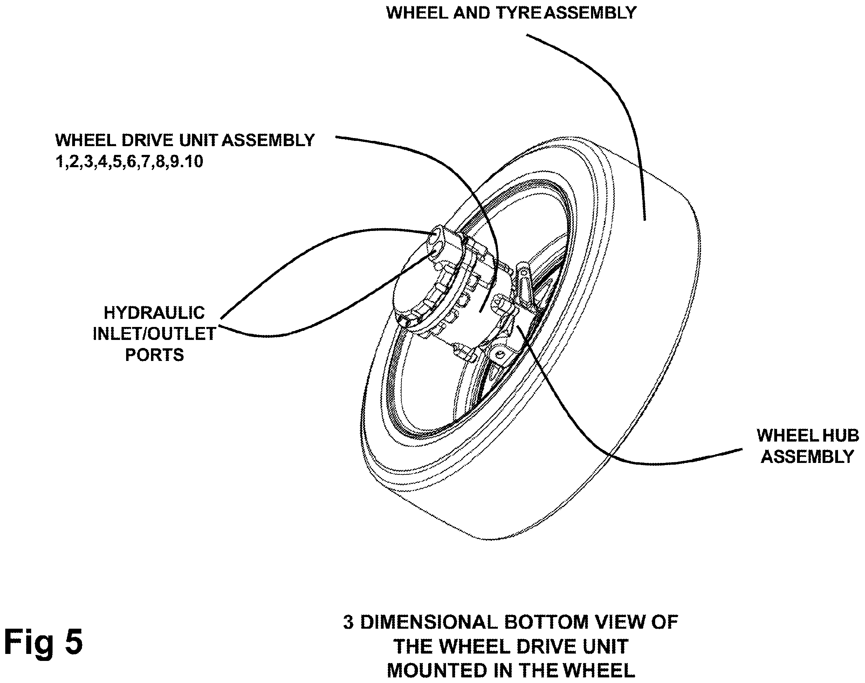

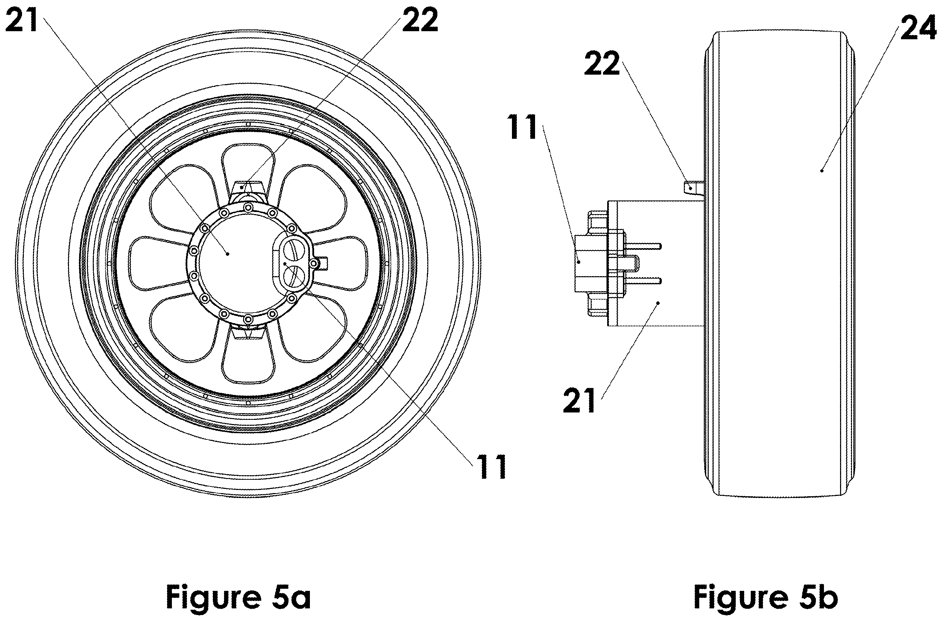

Referring generally to FIG 4a, 4b and 5a 5b there is shown the Wheel Drive unit assembly mounted in the wheels. The wheel drive assembly unit 21 is mounted on a wheelhub assembly 22 at the centre of the wheel and tyre assembly 24. The wheel hub assembly 22 includes hydraulic inlet/outlet ports 11. The wheel drive assembly unit 21

Referring generally to FIG 6. there is shown detailed annotated section view of the Wheel Drive unit assembly mounted in the wheels. The wheel assembly 24 has a tubular stub axle 30 on which the wheel hub assembly is rotatably mounted 22 with bearings 31, allowing the wheel hub assembly to control the orientation of the wheel assembly 24 and allowing the wheel assembly 24 to rotate. The tubular stub axle 30 is keyed to a drive shaft 32. The drive shaft 32 extends into the wheel drive unit assembly 21, and is keyed to the ABS clutch unit 9 within the ABS unit 8, and wheel/pump motor clutch unit 10 within the wheel/pump motor 7.

The clutch unit 9 and clutch unit 10 are shown here diagrammatically; many types of clutch mechanism are known and could be adapted for use in the Wheel Drive Unit. One type of clutch that could be advantageously used is a clutch which uses plates sealed within the hydraulic fluid which lubricates the clutch plates. An alternative hydraulic clutch that can be advantageously used is a fluid coupling that operates like a pump and turbine to achieve torque transference between the input and output. A further type of clutch that can be advantageously used is a viscous coupling, where increasing pressurization of the hydraulic fluid in the clutch increases the viscosity of the fluid and hence couples the input and output plates. Whichever type of clutch is being used, it is hydraulically actuated and controlled by the Vehicle Control System.

The coupling parts of these clutches are sealed unit, so any minimal wear results in particles in the fluid, which can be removed with a filter and/or by changing the fluid, and prevents release of particulates into the atmosphere.

The wheel drive unit assembly 21 is supplied with hydraulic fluid via the hydraulic inlet/outlet ports 11, which are controlled by the previously described valve blocks contained in a valve system manifold assembly 35. Operating valve block 2 to direct hydraulic fluid to the wheel/pump motor clutch unit 10 engages the wheel/pump motor 7 with the drive shaft, while operating valve blocks 6, 7 to direct hydraulic fluid to the wheel/pump motor 7 (which is bi-rotational) causes the drive shaft to rotate and turning the wheel assembly 24. The wheel/pump motor clutch unit 10 is keyed to the wheel/pump motor 7 for example with splines, and separately keyed (again ideally with splines) to the drive shaft 32. The ABS clutch 9 is similarly keyed (ideally by splines) to the drive shaft 32. The clutch units can conveniently be cooled with a cooling water jacket, the heated cooling fluid of which can be cycled through a heat recovery unit to convert a proportion of the heat to electric energy to be stored in the battery or directed to the electrical components of the system. The clutch units and cooling system may also be insulated, so that heat loss to the environment is minimized.

Operating valve block 1 to direct hydraulic fluid to the ABS clutch unit 9 engages the ABS unit 8.

Under normal drive conditions the drive is via the Motor/Pump as a Motor with speed controlled via Flow and Pressure from the Electric Motor/Hydraulic combined Power unit and or the accumulators, as required by the conditions dictated by the vehicle Control Module.

During braking, pressurized fluid is created in the ABS unit, which can then be directed back to the system, either to be used to store energy in the accumulator (or directed to other systems of the vehicle). In normal retardation the degree of braking effect is established by modulating between the Motor/Pump on the wheel via the valving system. The energy from the Pump action is normally stored in the braking accumulator to be used as required. This allows the vehicle to be driven under normal conditions by a 'One Pedal' driver control. In some cases it would be possible to a second pedal to engage the brakes by controlling the braking effect by pressure on this pedal (a more standard configuration). In this configuration the modulation between the Motor/Pump on the wheel is controlled by the pressure on this pedal. If the wheel locks under this control or the One pedal system the ABS will take over by the same modulating effect but controlled by the ABS not the normal drive system.

The independent ABS system clutch is normally disengaged and is designed to engage when power is lost to the normal wheel drive system for whatever reason and will normally bring the vehicle to a halt The control of this is incumbent in the vehicle control system but as a function is mechanically controlled within the wheel. This is a recirculating hydraulic pump which has a valve which is actuated by the rotation of the wheel shaft to modulate between lock and unlock until there is no more rotation and then it is locked.

Both the ABS drive clutch 9 and the wheel drive clutch 10 operate regeneratively, that is, that they can be operated to act as a brake upon the rotation of the wheel and the energy of the fluid in the clutch pressurized by the action can be recovered. The ABS drive clutch 9 and the wheel drive clutch 10 can be operated entirely separately, so that the wheel drive clutch 10 can be operated at a constant speed while the ABS drive clutch 9 is engaged as required to reduce the torque and recover the excess energy that the wheel drive clutch 10 is transferring to the drive shaft, which may be more efficient than continually varying the speed of the wheel drive clutch 10.

The ABS drive clutch 9 is also biased so that the application of hydraulic pressure to its actuation system disengages the ABS drive clutch 9 from the drive shaft, so that it engages to brake the wheel when hydraulic pressure is lost, so that it acts as a failsafe brake to bring the wheel to a stop when hydraulic pressure is lost. Further, the braking action of the ABS drive clutch 9 momentarily increases hydraulic pressure which can be used to release the ABS drive clutch 9, so that the wheel is brought to a stop without being fully locked.

The system is ideally suited to four wheel drive vehicles and vehicles having more than four wheels, and each wheel can be independently driven and braked (the system may though of course be applied to only two wheels of a vehicle).

## Claims

1. A wheel drive system comprising;
A plurality of wheels (16) each having a hub (22),
a propulsion system for supplying pressurized hydraulic fluid via a hydraulic circuit,
an energy storage system for storing energy from the hydraulic circuit, and for providing energy to the hydraulic circuit,
a valve system (1, 2, 3, 4, 5, 6, 35) to control the flow between the propulsion system, the hydraulic motor/pump unit (7) and the storage system, and
a hydraulic pump/motor (7) mounted on the hub (22) of each wheel (16) connected to a hydraulic circuit, capable of driving the wheel (16) through the application of pressurized hydraulic from the hydraulic circuit and supplying energy back to the hydraulic circuit when braking, and
a vehicle control system that controls the driving and braking of the hydraulic Pump/motor (7)
the propulsion system and the energy storage system being located remotely from the hydraulic pump/motor (7) mounted on the hub (22)
***characterised in that***
the hydraulic pump/motor (7) of each wheel (16) includes clutch means (10) allowing the wheel (16) to be independently driven and braked

2. A wheel drive motor/pump unit (7) as recited in claim 1, wherein said unit (7) are used to drive the wheels (16) and in other embodiment can be used to counterbalance the un-sprung weight of the vehicle.

3. A wheel drive system according to any previous clam, wherein energy recovered during breaking is stored in a hydraulic accumulator.

4. A wheel drive system according to any previous clam wherein an ABS system (8) is included.

5. A wheel drive system according to clam 3 wherein the ABS system (8) includes an ABS Drive Clutch (9) designed to independently engage the ABS system (8) automatically and independently brakes and modulates the braking of the vehicle bringing the vehicle to a stop without reliance on the vehicle control systems if any failure of the standard control functions fail under normal operation.

6. A wheel drive system according to any previous clam wherein the wheel drive includes a clutch (9, 10) to act primarily as the failsafe parking brake but may or may not utilized be for other function that may or may not be commanded by the vehicle control system.

7. A wheel drive system according to any previous clam, wherein the vehicle control system responds to driver commands or alternatively responds to commands from a driverless system

8. A wheel drive system according to any previous clam, wherein the vehicle control system optimizes operation of the various subsystems depending on the operating conditions.

## Patentansprüche

1. Radantriebssystem, umfassend;
eine Vielzahl von Rädern (16), die jeweils eine Nabe (22) aufweisen,
ein Antriebssystem für die Versorgung mit druckbeaufschlagter Hydraulikflüssigkeit über einen Hydraulikkreis,
ein Energiespeichersystem für das Speichern von Energie aus dem Hydraulikkreis und für das Bereitstellen von Energie an den Hydraulikkreis,
ein Ventilsystem (1, 2, 3, 4, 5, 6, 35) für das Regeln des Durchflusses zwischen dem Antriebssystem, der Hydraulikmotor-/Pumpeneinheit (7) und dem Speichersystem, und
eine Hydraulikpumpe/einen Hydraulikmotor (7), die/der an der Nabe (22) jedes mit einem Hydraulikkreis verbundenen Rads (16) montiert ist und die/der in der Lage ist, das Rad (16) durch Anlegen von druckbeaufschlagter Hydraulik aus dem Hydraulikkreis anzutreiben und beim Bremsen Energie an den Hydraulikkreis zurückzuführen, und
ein Fahrzeugsteuerungssystem, das den Antrieb und das Bremsen der Hydraulikpumpe/des Hydraulikmotors (7) steuert,
wobei das Antriebssystems und das Energiespeicherungssystem entfernt von der Hydraulikpumpe/dem Hydraulikmotor (7) positioniert sind, die/der an der Nabe (22) montiert ist,
***dadurch gekennzeichnet, dass***
die Hydraulikpumpe/der Hydraulikmotor (7) jedes Rads (16) eine Kupplungsvorrichtung (10) einschließt, die es dem Rad (16) erlaubt, unabhängig angetrieben und abgebremst zu werden.

2. Radantriebsmotor-/Pumpeneinheit (7) nach Anspruch 1, wobei die Einheit (7) verwendet wird, um die Räder (16) anzutreiben, und in einer anderen Ausführungsform verwendet werden kann, um die ungefederte Masse des Fahrzeugs auszugleichen.

3. Radantriebssystem nach einem der vorstehenden Ansprüche, wobei Energie, die beim Bremsen zurückgewonnen wird, in einem Hydraulikspeicher gespeichert wird.

4. Radantriebssystem nach einem der vorstehenden Ansprüche, wobei ein ABS-System (8) eingeschlossen ist.

5. Radantriebssystem nach Anspruch 3, wobei das ABS-System (8) eine ABS-Antriebskupplung (9) einschließt, die so ausgelegt ist, dass sie das ABS-System (8) automatisch und unabhängig voneinander einkuppelt und bremst und das Bremsen des Fahrzeugs moduliert, um das Fahrzeug zum Stillstand zu bringen, ohne sich auf die Fahrzeugsteuerungssysteme zu verlassen, wenn unter normalen Betriebsbedingungen ein Ausfall der Standardsteuerungsfunktionen auftritt.

6. Radantriebssystem nach einem der vorstehenden Ansprüche, wobei der Radantrieb eine Kupplung (9, 10) einschließt, die primär als ausfallsichere Feststellbremse dient, aber auch für andere Funktionen verwendet werden kann, aber nicht muss, die vom Fahrzeugsteuerungssystem gesteuert werden können.

7. Radantriebssystem nach einem der vorstehenden Ansprüche, wobei das Fahrzeugsteuerungssystem auf Fahrerbefehle reagiert oder alternativ auf Befehle von einem fahrerlosen System reagiert.

8. Radantriebssystem nach einem der vorstehenden Ansprüche, wobei das Fahrzeugsteuerungssystem den Betrieb der verschiedenen Teilsysteme, abhängig von den Betriebsbedingungen, optimiert.

## Revendications

1. Système d'entraînement de roue comprenant ;
une pluralité de roues (16) présentant chacune un moyeu (22),
un système de propulsion destiné à l'alimentation en fluide hydraulique sous pression par l'intermédiaire d'un circuit hydraulique,
un système de stockage d'énergie destiné à stocker l'énergie provenant du circuit hydraulique et destiné à fournir de l'énergie au circuit hydraulique,
un système de vannes (1, 2, 3, 4, 5, 6, 35) destiné à réguler le débit entre le système de propulsion, l'unité moteur/pompe hydraulique (7) et le système de stockage, et
une pompe/un moteur hydraulique (7) monté sur le moyeu (22) de chaque roue (16) reliée à un circuit hydraulique, capable d'entraîner la roue (16) au moyen de l'application d'une pression hydraulique provenant du circuit hydraulique et la fourniture de l'énergie de retour vers le circuit hydraulique lors du freinage, et
un système de commande de véhicule qui commande l'entraînement et le freinage de la pompe/du moteur hydraulique (7),
le système de propulsion et le système de stockage d'énergie étant situés à distance de la pompe/du moteur hydraulique (7) montée sur le moyeu (22),
***caractérisé en ce que***
la pompe/le moteur hydraulique (7) de chaque roue (16) comporte des moyens d'embrayage (10) permettant à la roue (16) d'être entraînée et freinée indépendamment.

2. Unité moteur/pompe d'entraînement de roue (7) tel que décrit dans la revendication 1, dans laquelle ladite unité (7) est utilisée pour entraîner les roues (16) et, dans un autre mode de réalisation, peut être utilisée pour contrebalancer le poids non suspendu du véhicule.

3. Système d'entraînement de roue selon une quelconque revendication précédente, dans lequel l'énergie récupérée pendant le freinage est stockée dans un accumulateur hydraulique.

4. Système d'entraînement de roue selon une quelconque revendication précédente, dans lequel un système ABS (système de freinage antiblocage) (8) est inclus.

5. Système d'entraînement de roue selon la revendication 3, dans lequel le système ABS (8) comporte un embrayage d'entraînement de l'ABS (9) conçu pour engager indépendamment le système ABS (8), freine automatiquement et indépendamment et module le freinage du véhicule amenant le véhicule à un arrêt sans dépendre des systèmes de commande du véhicule si une défaillance quelconque des fonctions de commande standard échoue dans le fonctionnement normal.

6. Système d'entraînement de roue selon une quelconque revendication précédente, dans lequel l'entraînement de roue comporte un embrayage (9, 10) pour agir principalement comme frein de stationnement à sécurité intégrée, mais qui peut ou non être utilisé pour une autre fonction qui peut ou non être commandée par le système de commande de véhicule.

7. Système d'entraînement de roue selon une quelconque revendication précédente, dans lequel un système de commande de véhicule répond aux commandes du conducteur ou répond alternativement aux commandes provenant d'un système sans conducteur.

8. Système d'entraînement de roue selon une quelconque revendication précédente, dans lequel le système de commande de véhicule optimise le fonctionnement des divers sous-systèmes en fonction des conditions de fonctionnement.
